(19) Europäisches Patentamt
European Patent Office
Office européen des brevets

(11) **EP 2 861 319 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(21) Anmeldenummer: **13728394.1**

(22) Anmeldetag: **13.06.2013**

(51) Int Cl.:
*C11D 3/00* (2006.01)    *C11D 3/37* (2006.01)
*C11D 3/08* (2006.01)    *C11D 3/10* (2006.01)
*B01D 19/04* (2006.01)  *C11D 3/12* (2006.01)
*C11D 7/10* (2006.01)    *C11D 7/12* (2006.01)
*C11D 7/14* (2006.01)    *C11D 3/04* (2006.01)

(86) Internationale Anmeldenummer:
**PCT/EP2013/062252**

(87) Internationale Veröffentlichungsnummer:
**WO 2013/189825 (27.12.2013 Gazette 2013/52)**

(54) **ANTISCHAUMMITTEL UND DEREN VERWENDUNG IN WASCHMITTELN**

ANTIFOAMING AGENTS AND USE THEREOF IN DETERGENTS

AGENT ANTIMOUSSE ET UTILISATION DUDIT AGENT ANTIMOUSSE DANS DES DÉTERGENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2012 DE 102012210211**

(43) Veröffentlichungstag der Anmeldung:
**22.04.2015 Patentblatt 2015/17**

(73) Patentinhaber: **Wacker Chemie AG**
**81737 München (DE)**

(72) Erfinder:
• **MERGET, Markus**
**84561 Mehring (DE)**
• **BECKER, Richard**
**84489 Burghausen (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A1- 0 685 250**     **EP-A1- 0 692 567**
**WO-A2-2011/107361**   **DE-A1- 19 739 991**

EP 2 861 319 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft Antischaummittel und deren Verwendung in Waschmittelzusammensetzungen.

Bei der Handwäsche wird Wasser in einen Eimer oder Einweichbehälter und bei der maschinenunterstützten Handwäsche in die Waschtrommel einer Waschmaschine gegeben. Anschließend wird die gewünschte Menge an Waschmittel dosiert. Durch Umrühren mit der Hand oder Laufenlassen der Waschmaschine wird Schaum erzeugt. Im nächsten Schritt wird die schmutzige Wäsche eingetaucht und für 10 bis 30 min einweichen gelassen. Bei der Handwäsche wird nach dieser Zeit die Wäsche mit der Hand zur Schmutzentfernung gewaschen. Bei Waschmaschinen wird der Waschzyklus gestartet (Dauer: ca. 60 Minuten). Eine signifikante Schaumbildung während des Waschgangs wird als eine gute Reinigungswirkung des Waschmittels interpretiert.

Beim Spülen wird die überschüssige Waschflotte weggeschüttet und die Textilien werden zur Entfernung der überschüssigen, aufgesaugten Waschflotte ausgewrungen. Die Spülgänge bestehen aus Zugabe von Frischwasser, Spülen der Textilien zur Entfernung von Waschmittel-Resten, Wegschütten der Spülflotte und Auswringen der Textilien zur Entfernung der aufgesaugten Spülflotte. In der Regel werden diese Spülgänge solange wiederholt, bis kein Schaum mehr sichtbar ist (4 bis 5 Mal). Die Bildung von Schaum während des Spülgangs wird mit dem Vorhandensein von Waschmittel in Bezug gesetzt, was nicht erwünscht ist.

Um den Wasserverbrauch zu reduzieren und die Umwelt zu entlasten, wäre es deshalb wünschenswert, ein Antischaummittel zu haben, das im Waschgang nicht oder nur kaum die Schaumbildung beeinflusst und im Spülgang die Bildung von neuem Schaum nachhaltig unterdrückt. Dadurch könnte die Anzahl an Spülgängen und damit die Menge an verbrauchtem Wasser reduziert werden.

In US 4,637,890 ist eine granulare Waschmittelzusammensetzung beschrieben, welche ein verringertes Schäumen und eine verringerte Spülwassertrübung während dem auf einen Waschgang folgenden Spülgang bewirkt, wobei die Zusammensetzung ein grenzflächenaktives Mittel, einen wasserlöslichen Detergensgerüststoff und Schaumregelungsgranulate, die ein Siliconöl als schaumunterdrückendes Mittel sowie zusätzlich Fettsäureseife und ein quaternäres Ammoniumsalz enthalten, umfasst.

Das Antischaummittel wird in diesem Fall erst bei niedrigem pH-Wert aktiv, im Waschgang bei pH-Werten von > 9 ist es inaktiv. Bei der Handwäsche bzw. bei der maschinenunterstützten Handwäsche und bei der Maschinenwäsche werden üblicherweise bei nicht industriellen Anwendung diese hohen pH-Werte nicht erreicht, so dass die entschäumende Wirkung bereits im Waschgang einsetzt.

US 4,894,117 beschreibt eine Zusammensetzung eines agglomerierten Granulates für die verzögerte Freisetzung eines Antischaummittels in einer Waschflotte. Diese Antischaumgranulate zeigen eine verzögerte Freisetzung dadurch bedingt, dass das Siliconantischaummittel mit Cellulose verkapselt ist.

In EP 254 499 B1 wird eine Siliconentschäumerzusammensetzung offenbart, die erhalten wird durch Reaktion einer Mischung eines trimethylsilylterminierten Polydimethylsiloxans und eines silanolterminierten Polydimethylsiloxans mit einem Polyoxyethylen-Polyoxypropylen-Copolymeren und mit Silica. Die Verwendung als Antischaummittel in Waschmittelzusammensetzungen wird nicht beschrieben.

Die beiden oben genannten Dokumente nutzen als Technologie die Einkapselung von Siliconen bzw. Silicon-Entschäumern, wobei diese Substanzklassen eine starke Antischaumwirkung haben. Die Aktivität der verzögerten Antischaumwirkung im Spülgang ist von der Freisetzung dieser Wirkstoffe abhängig, die wiederum von vielen Parametern wie zum Beispiel der Temperatur der Flotte und der Dauer der einzelnen Schritte abhängt. Deshalb ist die Anwendung dieser Systeme ausschließlich bei der Maschinenwäsche möglich, wo hinsichtlich Temperatur und Dauer reproduzierbare Bedingungen vorliegen. Bei der Handwäsche oder bei der maschinenunterstützten Handwäsche können diese Systeme auf Grund der unterschiedlichen Waschgewohnheiten nicht eingesetzt werden. Auf der anderen Seite ist ein Produkt, das eine verzögerte Antischaumwirkung bzw. Schaumunterdrückung unabhängig von äußeren Parameter im Spülgang bei der Handwäsche oder bei der maschinenunterstützten Handwäsche hat, auch bei der Maschinenwäsche wirksam.

WO 2011/107361 A1 und WO 2011/107397 A1 beschreiben als Antischaummittel ein Polyether-haltiges Aminosiloxan bzw. ein Pulver, welches ein Polyether-haltiges Aminosiloxan auf einer Trägersubstanz enthält, sowie das Herstellungsverfahren als auch die Verwendung dieses Antischaummittels in Waschmittelzusammensetzungen für Handwäsche und Maschinenwäsche, wobei das Antischaummittel erst während des Spülganges seine Antischaumwirkung entfaltet. Das dem Antischaummittel zu Grunde liegende Aminosiloxan enthält ein endständiges Polyether-Fragment.

Als Wirkstoffe werden also Polyether-haltige Aminosiloxane, die erst im Spülgang eine verzögerte Antischaumwirkung bzw. Schaumunterdrückung entfalten, eingesetzt, die aufwendig herzustellen sind. Solche Materialien werden in der Praxis durch Äquilibrierungsreaktionen ausgehend von OH-terminierten Polydimethylsiloxanen, $\alpha,\omega$-Polyether-funktionellen Siloxanen und Hydrolysaten der entsprechenden Aminoalkylsilanen erzeugt. Nachteilig wirkt sich aus, dass bei deren Synthese oftmals zweiphasige Reaktionsgemische erhalten werden, da auf Grund von unterschiedlichen Polaritäten das Polyethersiloxan nicht mit den restlichen Komponenten kompatibel ist.

EP 685 250 A1 offenbart die Verwendung einer Mischung aus einem Aminosiloxan und einer hochdispersen Kieselsäure in Waschmitteln zur Verhinderung der Schaumbildung während des Spülgangs.

Nachteilig wirkt sich bei diesen Mischungen aus, dass bereits im Waschgang und nicht erst im Spülgang die Entschäumerwirkung einsetzt. Bei der Handwäsche bzw. bei der maschinenunterstützten Handwäsche ist eine starke Schaumbildung beim Waschgang erwünscht und wird als ein Zeichen von guter Reinigungswirkung des Waschmittels und damit von Sauberkeit interpretiert.

Es bestand die Aufgabe ein Antischaummittel in Substanz oder als Pulver auf einem Trägermaterial bereitzustellen, das bevorzugt in Waschmittelformulierungen für Textilien, eingesetzt werden kann, wobei das Schaumverhalten des Waschmittels im Waschgang nicht beeinflusst wird und erst bei den Spülgängen zeitlich verzögert eine gute Entschäumerwirkung auftritt.

Gegenstand der Erfindung sind Antischaumpulver mit verzögerter Antischaumwirkung enthaltend

(1) 5 bis 35 Gew.-% eines Antischaummittels, welches ein aminofunktionelles Organopolysiloxan ist und aus mindestens einer Siloxaneinheit der allgemeinen Formel

$$R^1{}_a Q_b SiO_{\frac{4-(a+b)}{2}} \qquad (I)$$

und Siloxaneinheiten der allgemeinen Formel

$$R^1{}_c SiO_{\frac{4-c}{2}} \qquad (II)$$

besteht, wobei

$R^1$ gleich oder verschieden ist und ein Wasserstoffatom, einen einwertigen, gegebenenfalls Fluor-, Chlor- oder Brom-substituierten $C_1$- bis $C_{18}$-Kohlenwasserstoffrest oder einen $C_1$- bis $C_{12}$-Alkoxyrest oder einen Hydroxyrest bedeutet, vorzugsweise einen $C_1$- bis $C_{18}$-Kohlenwasserstoffrest oder einen $C_1$- bis $C_3$-Alkoxyrest oder einen Hydroxyrest bedeutet, Q einen Aminorest der allgemeinen Formel

$$-R^2-[NR^3-(CH_2)_m-]_x NR^4 R^5 \qquad (III)$$

oder deren teilweise oder vollständig an den Stickstoffatomen protonierte Formen

bedeuten, wobei

$R^2$ einen zweiwertigen $C_1$-$C_{18}$-Kohlenwasserstoffrest, vorzugsweise einen zweiwertigen $C_2$- bis $C_4$-Kohlenwasserstoffrest,
$R^3$ ein Wasserstoffatom oder einen $C_1$-$C_{10}$-Alkylrest,
$R^4$ ein Wasserstoffatom oder einen $C_1$-$C_{10}$-Alkylrest,
$R^5$ ein Wasserstoffatom oder einen $C_1$-$C_{10}$-Alkylrest,
a 0, 1 oder 2, vorzugsweise 0 oder 1,
b 1, 2 oder 3, vorzugsweise 1,
c 0, 1, 2 oder 3, vorzugsweise 2 oder 3,
m 2, 3, oder 4, vorzugsweise 2 oder 3, und
x 0, 1 oder 2, vorzugsweise 0 oder 1, bedeuten,
und die Summe a+b kleiner gleich 3 ist,

(2) 65 bis 95 Gew.-% eines Trägermaterials ausgewählt aus der Gruppe von Natriumcarbonat, Natriumsulfat, Aluminiumsilikat, Kaliumcarbonat, Kaliumsulfat, Natriumhydrogencarbonat, Kaliumhydrogencarbonat und Zeolithe und Mischungen davon,

mit der Maßgabe, dass die Mitverwendung von Kieselsäuren in den erfindungsgemäßen Antischaumpulvern ausgeschlossen ist.

Vorzugsweise besteht das erfindungsgemäße Antischaumpulver aus (1) Aminosiloxan und dem oben genannten (2) Trägermaterial.

Beispiele für $C_1$- bis $C_{18}$-Kohlenwasserstoffreste $R^1$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-He-

3

xylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der alpha- und der beta-Phenylethylrest.

Beispiele für mit Fluor-, Chlor- oder Brom-substituierten Reste $R^1$ sind Halogenalkylreste, wie der 3,3,3-Trifluor-n-propylrest, der 2,2,2,2',2',2'-Hexafluor-isopropylrest, der Heptafluorisopropylrest und der o-, m- und p-Chlorphenylrest.

Die Alkoxyreste $R^1$ sind über ein Sauerstoffatom gebundene vorstehend beschriebene Alkylreste, wobei Beispiele für diese Alkylreste auch im vollen Umfang für die Alkoxyreste gelten.

Beispiele für die zweiwertigen $C_1$- bis $C_{18}$-Kohlenwasserstoffreste $R^2$ sind gesättigte gerad- oder verzweigtkettige oder cyclische Alkylenreste, wie der Methylen- und Ethylenrest sowie Propylen-, Butylen-, Pentylen-, Hexylen-, 2-Methylpropylen-, Cyclohexylen- und Octadecylenreste oder ungesättigte Alkylen- oder Arylenreste, wie der Hexenylenrest und Phenylenreste, wobei der n-Propylenrest und der 2-Methylpropylenrest besonders bevorzugt sind.

Beispiele für $C_1$- bis $C_{10}$-Alkylreste $R^3$, $R^4$ und $R^5$ sind die vorstehend bei $R^1$ aufgeführten Beispiele für lineare und cyclische Alkylreste und für mit Fluor-, Chlor- oder Bromatomen substituierten $C_1$- bis $C_{10}$-Alkylreste.

Bevorzugte Aminoreste Q sind solche der Formel

$$NH_2CH_2CH_2NH(CH_2)_3-,$$

$$NH_2(CH_2)_3-,$$

$$CH_3NHCH_2CH_2NH(CH_2)_3-,$$

$$(CH_3)_2NCH_2CH_2NH(CH_2)_3-,$$

$$(CH_3)_2NCH_2CH_2CH_2NH(CH_2)_3-,$$

$$CH_3CH_2HN(CH_2)_2NH(CH_2)_3-,$$

$$(CH_3CH_2)_2N(CH_2)_2NH(CH_2)_3-,$$

$$CH_3CH_2CH_2HN(CH_2)_2NH(CH_2)_3-,$$

$$(CH_3CH_2CH_2)_2N(CH_2)_2NH(CH_2)_3-$$

und

$$(Cyclohexyl)HN(CH_2)_2NHCH_2CH(CH_3)CH_2-,$$

wobei $NH_2CH_2CH_2NH(CH_2)_3-$ ein bevorzugtes Beispiel ist,
oder deren teilweise oder vollständig an den Stickstoffatomen protonierte Formen.

Bevorzugt als Antischaummittel sind die aminofunktionellen Organopolysiloxane, die neben Einheiten der allgemeinen Formel I auch Einheiten der allgemeinen Formel II aufweisen.

Bevorzugte aminofunktionelle Organopolysiloxane sind lineare Polydimethylsiloxane, die Siloxaneinheiten der allgemeinen Formel I und gegebenenfalls $C_1$- bis $C_3$-Alkoxy- oder Hydroxyendgruppen aufweisen.

Besonders bevorzugt als Antischaummittel sind daher aminofunktionelle Organopolysiloxane der allgemeinen Formel

$$Q_kR^1{}_{3-k}SiO(R_2SiO)_m(QR^1SiO)_nSiR^1{}_{3-k}Q_k \qquad (IV)$$

wobei

R gleich oder verschieden ist und einen einwertigen $C_1$- bis $C_{18}$-Kohlenwasserstoffrest bedeutet,
$R^1$ die oben dafür angegebene Bedeutung hat,
Q die oben dafür angegebene Bedeutung hat,
k 0 oder 1 ist,
m 0 oder eine ganze Zahl von 1 bis 1000 ist,
n 0 oder eine ganze Zahl von 1 bis 50 ist,

mit der Maßgabe, dass die Organopolysiloxane mindestens einen Rest Q je Molekül enthalten.

Beispiele für aminofunktionelle Organopolysiloxane der Formel (IV) sind mit Trimethylsiloxaneinheiten terminierte aminofunktionelle Polydimethylsiloxane und mit Hydroxydimethylsiloxaneinheiten und $C_1$-$C_3$-Alkoxydimethyl-siloxaneinheiten terminierte aminofunktionelle Polydimethylsiloxane.

Vorzugsweise beträgt das Verhältnis der Siloxaneinheiten der allgemeinen Formel (I) zu den Siloxaneinheiten der allgemeinen Formel (II) 1 : 1 bis 1 : 10 000, bevorzugt 1 : 2 bis 1 : 300. Die Amingehalte betragen vorzugsweise 0,5 bis 6 mequiv/g, bevorzugt 1,0 bis 5 mequiv/g, gemessen als Verbrauch an 1N Salzsäure in ml/g aminofunktionelles Organopolysiloxan bei der Titration bis zum Neutralpunkt.

Die aminofunktionellen Organopolysiloxane haben vorzugsweise eine durchschnittliche Viskosität von 25 bis 10 000 mPa.s, bevorzugt 50 bis 5 000 mPa.s, bei 25°C.

Es kann als Antischaummittel eine Art von aminofunktionellen Organopolysiloxanen (1) oder verschiedene Arten von aminofunktionellen Organopolysiloxanen (1) eingesetzt werden. Die Aminoreste Q in Formel (I) und Formel (IV) können teilweise oder vollständig protoniert sein.

Der Aminorest Q der Formel (III) kann teilweise oder vollständig protoniert sein durch Hinzufügen von Säuren zu den aminofunktionellen Organopolysiloxanen, wobei die Salzformen der Aminoreste erhalten werden.

Beispiele für Säuren sind Carbonsäuren mit 3 bis 18 Kohlenstoffatomen, die linear oder verzweigt sein können, wie Ameisensäure, Essigsäure, Propionsäure, Butansäure, Pivalinsäure, Sorbinsäure, Benzoesäure und Salicylsäure.

Vorzugsweise können protonierte Aminoreste **Q'** der allgemeinen Formel

$$-R^2-[NR^3-(CH_2)_m-]_xNH^+R^4R^5\ Z^- \qquad\qquad (Va)$$

oder

$$-R^2-[NH^+R^3-(CH_2)_m-]_xNH^+R^4R^5\ (x+1)\ Z^- \qquad\qquad (Vb),$$

wobei

$Z^-$ ein Anion zu $N^+$ ist, vorzugsweise ein Anion einer korrespondierenden Säure, bevorzugt ein Anion einer Carbonsäure, wie ein Acetatanion ist,

und $R^2$, $R^3$, $R^4$, $R^5$, m und x die oben dafür angegebenen Bedeutungen haben, eingesetzt werden.

$NH_2CH_2CH_2NH(CH_2)_3$- ist ein bevorzugter Aminorest Q und $N^+H_3CH_2CH_2NH(CH_2)_3$- $Z^-$ oder $N^+H_3CH_2CH_2N^+H_2(CH_2)_3$- $2\ Z^-$ (wobei $Z^-$ die oben dafür angegebene Bedeutung hat) sind daher bevorzugte protonierte Aminoreste Q'.

Die erfindungsgemäßen Antischaumpulver werden vorzugsweise hergestellt durch Mischen der aminofunktionellen Organopolysiloxane (1) mit den Trägermaterialien (2). Bevorzugt wird das Trägermaterial (2) vorgelegt und dann das Aminosiloxan (1) dazugegeben und mit (2) vermischt. Das Mischen kann bei Temperaturen von 20 bis 120°C und beim Druck der umgebenden Atmosphäre, also bei etwa 1020 hPa, oder auch bei höheren oder niedrigeren Drücken erfolgen.

Die erfindungsgemäßen Antischaummittel bzw. deren Pulver haben den Vorteil, dass sie das Schaumverhalten des Waschmittels im Waschgang nicht beeinflussen und erst bei den Spülgängen zeitlich verzögert eine gute Entschäumerwirkung auftritt.

Die erfindungsgemäßen Antischaummittel bzw. deren Pulver haben weiterhin den Vorteil, große Mengen an Wasser durch Vermeidung von unnötigen Spülgängen einzusparen und können für unterschiedliche Anwendungsgebiete wie zum Beispiel Personal Care, Hair Care, Home Care und dergleichen verwendet werden.

Gegenstand der Erfindung sind daher Waschmittelzusammensetzungen enthaltend

(A) erfindungsgemäße Antischaumpulver und
(B) übliche Waschmittelkomponenten.

Die erfindungsgemäßen Antischaumpulver werden in den Waschmittelzusammensetzungen in Mengen von vorzugsweise 0,5 bis 5 Gew.-%, bezogen auf die Waschmittelzusammensetzung, eingesetzt.

Vorzugsweise werden die Waschmittelzusammensetzungen für die Handwäsche oder die maschinenunterstützte Handwäsche eingesetzt. Sie können aber auch für die Maschinenwäsche verwendet werden.

Beispiele für übliche Waschmittelkomponenten (B) für die Hand- oder Maschinenwäsche sind Tenside, vorzugsweise anionische und nicht-ionische Tenside, Builders, Bleichmittel, Enzyme, chelatbildende Verbindungen und Parfüme, wie zum Beispiel in Handbook of Detergents, Part D, Chapt. 3, S. 51 ff.: Randall A. Watson "Laundry Detergent Formulations" beschrieben.

**Beispiele:**

**1. Synthese der erfindungsgemäßen Aminöle bzw. der nicht-erfindungsgemäßen Aminöl-Dispersion**

**Beispiel 1** (Synthese des Methyl-terminierten Aminöls 1):

60,2 g eines OH-terminierten Polydimethylsiloxans mit einer Viskosität von 80 mm$^2$/s (25°C), 22,4 g eines OH-terminierten Hydrolysats von Aminoethylaminopropylmethyldimethoxysilan mit 2460 mm$^2$/s (25°C) und 30,6 g eines Methyl-terminierten Polydimethylsiloxans mit einer Viskosität von 20 mm$^2$/s (25°C) werden in einem Dreihalskolben mit Rührer und Wasserabscheider vorgelegt und auf 120°C erwärmt. Bei dieser Temperatur werden 103 mg einer 20%igen Lösung von KOH in Methanol dosiert und das resultierende Reaktionsgemisch für 2 h bei 120°C und einem Druck von 70 mbar gerührt. Das gebildete Wasser wird im Wasserabscheider abgetrennt. Anschließend wird das Vakuum gebrochen, das Reaktionsgemisch auf 80°C abgekühlt, 33,1 mg Essigsäure zur Neutralisation dosiert und das resultierende Reaktionsgemisch für 30 min gerührt. Danach wird auf Raumtemperatur abgekühlt, filtriert und an einem Rotationsverdampfer bei 150°C/1mbar für 1 h entflüchtigt. Man erhält ein klares Öl mit einer Viskosität von 180 mm$^2$/s (25°C) und einer Amindichte von 2,8 mEqu./g.

**Beispiel 2 (Synthese des Methyl-terminierten Aminöls 2):**

Aminöl 2 wird in Analogie zu Aminöl 1 mit folgender Stöchiometrie hergestellt:

- 65,4 g eines OH-terminierten Polydimethylsiloxans mit einer Viskosität von 80 mm$^2$/s (25°C)
- 17,0 g eines OH-terminierten Hydrolysats von Aminoethylaminopropyl-methyldimethoxysilan mit 2460 mm$^2$/s (25°C)
- 30,6 g eines Methyl-terminierten Polydimethylsiloxans mit einer Viskosität von 20 mm$^2$/s (25°C)

Man erhält ein klares Öl mit einer Viskosität von 185 mm$^2$/s (25°C) und einer Amindichte von 2,2 mEqu./g.

**Beispiel 3 (Synthese des Methyl-terminierten Aminöls 3):**

Aminöl 3 wird in Analogie zu Aminöl 1 mit folgender Stöchiometrie hergestellt:

- 67,4 g eines OH-terminierten Polydimethylsiloxans mit einer Viskosität von 80 mm$^2$/s (25°C)
- 15,0 g eines OH-terminierten Hydrolysats von Aminoethylaminopropyl-methyldimethoxysilan mit 2460 mm$^2$/s (25°C)
- 30,6 g eines Methyl-terminierten Polydimethylsiloxans mit einer Viskosität von 20 mm$^2$/s (25°C)

Man erhält ein klares Öl mit einer Viskosität von 169 mm$^2$/s (25°C) und einer Amindichte von 1,8 mEqu./g.

**Beispiel 4 (Synthese des reaktiv-terminierten Aminöls 4):**

79,0 g eines OH-terminierten Polydimethylsiloxans mit einer Viskosität von 80 mm$^2$/s (25°C) und 21,0 g Aminoethylaminopropyl-methyldimethoxysilan werden in einem Dreihalskolben mit Rührer und Wasserabscheider vorgelegt und auf 120°C erwärmt. Bei dieser Temperatur werden 200 mg einer 20%igen Lösung von KOH in Methanol dosiert und das resultierende Reaktionsgemisch für 2 h bei 120°C und einem Druck von 700 mbar gerührt. Das gebildete Wasser/Methanol-Gemisch wird im Wasserabscheider abgetrennt. Anschließend wird das Vakuum gebrochen, das Reaktionsgemisch auf 80°C abgekühlt, 33,1 mg Essigsäure zur Neutralisation dosiert und das resultierende Reaktionsgemisch für 30 min gerührt. Danach wird auf Raumtemperatur abgekühlt, filtriert und an einem Rotationsverdampfer bei 150°C/1mbar für 1 h entflüchtigt. Man erhält ein klares Öl mit einer Viskosität von 106 mm$^2$/s (25°C) und einer Amindichte von 2,7 mEqu./g.

**Beispiel 5 (Synthese des reaktiv-terminierten Aminöls 5):**

950,0 g eines OH-terminierten Polydimethylsiloxans mit einer Viskosität von 80 mm$^2$/s (25°C), 317,0 g Aminoethylaminopropyltrimethoxysilan und 1,2 g einer 30%igen Lösung von Natriummethylat in Methanol werden in einem Dreihalskolben mit Rührer und Rückflusskühler vorgelegt und für 3 h auf Rückfluss gerührt. Anschließend wird das Reaktionsgemisch auf 50°C abgekühlt und mit 2,4 g 20%iger Salzsäure versetzt. Danach wird weiter auf Raumtemperatur abgekühlt, filtriert und an einem Rotationsverdampfer bei 150°C/1mbar für 1 h entflüchtigt. Man erhält ein klares Öl mit einer Viskosität von 25 mm$^2$/s (25°C) und einer Amindichte von 2,5 mEqu./g.

**Vergleichsbeispiel (Herstellung einer Dispersion aus Aminöl 1 und hoch disperser Kieselsäure, nicht erfindungsgemäß):**

99,0 g des Aminöls 1 werden mit 1,0 g HDK des Typs SKS 300 (erhältlich bei Wacker Chemie AG) versetzt und anschließend für 10 min bei Raumtemperatur mit einem Turrax gerührt. Die resultierende Suspension wird direkt für die Herstellung des Antischaumpulvers verwendet.

**2. Herstellung der erfindungsgemäßen Antischaumpulver bzw. des nicht-erfindungsgemäßen Antischaumpulvers**

In einem Becherglas werden 90 g Natriumcarbonat-Pulver (Hersteller: Sigma-Aldrich, Artikelnummer 330361, Partikelgröße: <100 $\mu$m: 3,25 %, 100 - 200 $\mu$m: 26,00 %, 200 - 315 $\mu$m: 46,29 %, 315 - 500 $\mu$m: 23,74 %, 500 - 1000 $\mu$m: 0,67 %, 1000 - 2000 $\mu$m: 0,05 %, >2000 $\mu$m: 0 %;) vorgelegt und mit einem Flügelrührer bei 750 UpM gerührt. Anschließend werden innerhalb von 2 min gleichmäßig mit einer Pipette 10 g der oben beschriebenen Aminöle 1 bis 5 bzw. die Aminöl-Dispersion gemäß Vergleichsbeispiel zu dem Natriumcarbonat-Pulver gegeben. Nach vollständiger Dosierung wird noch 1 min nachgerührt

**3. Anwendungstechnische Untersuchungen für Handwäsche**

Die Handwaschtests wurden analog zu folgendem Protokoll durchgeführt:

- In einer Schüssel werden für den Waschgang 5,0 l vollentsalztes Wasser vorgelegt.
- 17,5 g der Tide Pulverwaschmittel, Prod. Nr. 99353576 (Hersteller Procter & Gamble, China) werden in einem Becherglas mit 1,05 g Antischaumpulver (wie oben unter Punkt 2 hergestellt) gemischt und in die Schüssel zugegeben.
- Die resultierende Flotte wird für 2 min leicht bewegt, so dass sich die Waschmittelformulierung auflöst.
- Ein vorgewaschenes und trockenes Frotteehandtuch (100% Baumwolle, Größe ca. 45 x 90 cm; Flächengewicht ca. 500 g/m$^2$) wird in vier Teile zerschnitten und gewogen.
- Jeweils ein Frotteestück wird zehnmal in die Flotte getaucht und ausgewrungen.
- 30 Sekunden nach dem letzten Tauchen bzw. Auswringen wird die Waschflotte von oben fotografiert und die schaumbedeckte Oberfläche in Prozent geschätzt.
- Alle vier Frotteestücke werden auf einen Gewichtszuwachs von 390 g (+/- 0,5 g) ausgewrungen.
- Für den Spülgang werden in einer weiteren Schüssel 5,0 l vollentsalztes Wasser vorgelegt.
- Alle vier Frotteestücke werden in die Schüssel gegeben und jeweils dreimal getaucht und ausgewrungen.
- Alle vier Frotteestücke werden auf einem Gewichtszuwachs von 450 g gebracht.
- Nach 30 Sekunden wird von der Spülflotte ein Foto gemacht und die schaumbedeckte Oberfläche in Prozent geschätzt.
- Insgesamt werden 5 Spülgänge mit jeweils frischem Wasser gemacht.

Die Ergebnisse sind in Tabelle 1 zusammengefasst.

**Tabelle: Schaum im Waschgang und den Spülgängen bei Handwäsche**

| AntischaumPulver Beispiele/ Vergleichsbeispiel | Schaum Waschgang [%] | Schaum Spülgang 1 [%] | Schaum Spülgang 2 [%] | Schaum Spülgang 3 [%] | Schaum Spülgang 4 [%] | Schaum Spülgang 5 [%] |
|---|---|---|---|---|---|---|
| Blindwert | 100 | 100 | 95 | 70 | 20 | 10 |
| Beispiel 1 | 75 | 95 | 5 | 0 | 0 | 0 |
| Beispiel 2 | 80 | 95 | 5 | 0 | 0 | 0 |
| Beispiel 3 | 95 | 95 | 5 | 5 | 5 | 0 |
| Beispiel 4 | 75 | 95 | 0 | 0 | 0 | 0 |
| Beispiel 5 | 70 | 95 | 40 | 30 | 20 | 10 |
| VergleichsBeispiel | 40 | 80 | 10 | 5 | 0 | 0 |

Bei den in der Tabelle angegebenen Beispielen wurden Antischaumpulver nach der in Punkt 2 beschriebenen Vorgehensweise hergestellt unter Verwendung der in den Bespielen 1 bis 5 beschriebenen Aminölen bzw. im Vergleichsbeispiel beschriebenen Aminöl-Dispersion. Die Konzentration des Aminöls auf dem Trägermaterial Natriumcarbonat betrug in allen Fällen 10 %.

Die erfindungsgemäßen Beispiele zeigen eine gute Entschäumerwirkung im Spülgang, wobei das Schäumen im Waschgang (95-70 %) kaum beeinflusst wird.

Das Vergleichsbeispiel zeigt gegenüber den erfindungsgemäßen Beispielen eine starke Beeinträchtigung des Schäumens (40 %) im Waschgang, was unerwünscht ist.

**4. Anwendungstechnische Untersuchungen für Maschinenwäsche**

Die Maschinenwaschtests wurden analog zu folgendem Protokoll durchgeführt:

- In einer Miele Haushaltswaschmaschine vom Typ Novotronic W 918 werden 3,5 kg sauberer Wäsche aus Baumwolle vorgelegt.
- 130 g des Testwaschmittels ECE-2 (Quelle: wfk Testgewebe GmbH, D-41379 Brüggen-Bracht, Artikelnummer 88031, entschäumerfrei) wird mit 0,65 g Antischaummittel SILFOAM® SC 124 (erhältlich bei Wacker Chemie AG) in einem Becherglas vermischt (Vergleichsversuch). Beim erfindungsgemäßen Beispiel werden zusätzlich 0,65 g Aminöl 1 (entspricht 6,5 g eines 10%iges Pulver auf Soda; Herstellung siehe Punkt 2) hinzugefügt.
- Das Testwaschmittel wird direkt in die Waschmaschinentrommel gegeben.
- Waschmaschine wird bei 40°C bzw. 95°C mit Waschprogramm Koch-/Buntwäsche und einer Wasserhärte von 3°dH gestartet, Schleuderdrehzahl ist 1600 UpM.
- Der sichtbare Bereich des Bullauges wird mit einer vertikalen Skala versehen. Die Skala geht von 0% (kein Schaum) bis 100% (Bullauge komplett voll Schaum).
- Visuelle Erfassung der Schaumhöhe erfolgt während der gesamten Spülgänge in Schritten von 1 min.
- Berechnung des Mittelwertes erfolgt aus allen Einzelwerten der Schaumhöhenerfassung.

**Beurteilung Entschäumung im Spülgang,** Mittelwert über alle Spülgänge:

**Waschtemperatur 40°C:**

Vergleichsversuch (Maschine, nicht erfindungsgemäß):

mit 0,5% SILFOAM® SC 124: **36%**

Beispiel (Maschine, erfindungsgemäß):

mit 0,5% SILFOAM® SC 124 + 0,5% Aminöl 1 (Aminöl 1 als 10%iges Pulver auf Sodaträger, siehe Punkt 2) **32%**

**Waschtemperatur 95°C:**

Vergleichsversuch (Maschine, nicht erfindungsgemäß):

mit 0,5% SILFOAM® SC 124: **68%**

Beispiel (Maschine, erfindungsgemäß):

mit 0,5% SILFOAM® SC 124 + 0,5% Aminöl 1 (Aminöl 1 als 10%iges Pulver auf Sodaträger, siehe Punkt 2): **37%**

Durch Zugabe des erfindungsgemäßen Antischaumpulvers, das das erfindungsgemäße Aminöl enthält, wird eine gute Entschäumerwirkung im Spülgang erzielt, während beim Vergleichsversuch ohne das erfindungsgemäße Antischaumpulver aber mit Zusatz eines handelsüblichen Antischaummittels die Entschäumerwirkung im Spülgang insbesondere bei hohen Waschtemperaturen deutlich schlechter ist.

**Patentansprüche**

1. Antischaumpulver mit verzögerter Antischaumwirkung enthaltend

(1) 5 bis 35 Gew.-% eines Antischaummittels, welches ein aminofunktionelles Organopolysiloxan ist und aus mindestens einer Siloxaneinheit der allgemeinen Formel

$$R^1{}_a Q_b SiO_{\frac{4-(a+b)}{2}} \qquad (I)$$

und Siloxaneinheiten der allgemeinen Formel

$$R^1{}_c SiO_{\frac{4-c}{2}} \qquad (II)$$

besteht, wobei

$R^1$ gleich oder verschieden ist und ein Wasserstoffatom, einen einwertigen, gegebenenfalls Fluor-, Chlor- oder Brom-substituierten $C_1$- bis $C_{18}$-Kohlenwasserstoffrest oder einen $C_1$- bis $C_{12}$-Alkoxyrest oder einen Hydroxyrest bedeutet,
Q eine Aminogruppe der allgemeinen Formel

$$-R^2-[NR^3-(CH_2)_m-]_x NR^4 R^5 \qquad (III)$$

oder deren teilweise oder vollständig an den Stickstoffatomen protonierte Formen bedeuten, wobei

$R^2$ einen zweiwertigen $C_1$-$C_{18}$-Kohlenwasserstoffrest,
$R^3$ ein Wasserstoffatom oder einen $C_1$-$C_{10}$-Alkylrest,
$R^4$ ein Wasserstoffatom oder einen $C_1$-$C_{10}$-Alkylrest,
$R^5$ ein Wasserstoffatom oder einen $C_1$-$C_{10}$-Alkylrest,
a 0, 1 oder 2,
b 1, 2 oder 3,
c 0, 1, 2 oder 3,
m 2, 3, oder 4 und
x 0, 1 oder 2 bedeuten,

und die Summe a+b kleiner gleich 3 ist,

(2) 65 bis 95 Gew.-% eines Trägermaterials ausgewählt aus der Gruppe von Natriumcarbonat, Natriumsulfat, Aluminiumsilikat, Kaliumcarbonat, Kaliumsulfat, Natriumhydrogencarbonat, Kaliumhydrogencarbonat und Zeolithe und Mischungen davon, mit der Maßgabe, dass die Mitverwendung von Kieselsäuren in den Antischaumpulvern ausgeschlossen ist.

2. Antischaumpulver nach Anspruch 1, **dadurch gekennzeichnet, dass** als aminofunktionelle Organopolysiloxane (1) solche der allgemeinen Formel

$$Q_k R^1{}_{3-k} SiO(R_2 SiO)_m (QR^1 SiO)_n SiR^1{}_{3-k} Q_k \qquad (IV)$$

wobei

R gleich oder verschieden ist und einen einwertigen $C_1$-bis $C_{18}$-Kohlenwasserstoffrest bedeutet,
$R^1$ die im Anspruch 1 dafür angegebene Bedeutung hat,
Q die im Anspruch 1 dafür angegebene Bedeutung hat,
k 0 oder 1 ist,
m 0 oder eine ganze Zahl von 1 bis 1000 ist,
n 0 oder eine ganze Zahl von 1 bis 50 ist,

mit der Maßgabe, dass die Organopolysiloxane mindestens einen Rest Q je Molekül enthalten, eingesetzt werden.

3. Antischaumpulver nach Anspruch 1 oder 2, **dadurch gekennzeichnet, dass** Q ein Rest der Formel

$NH_2CH_2CH_2NH(CH_2)_3$- oder deren teilweise oder vollständig protonierte Formen $N^+H_3CH_2CH_2NH(CH_2)_3$- $Z^-$ oder $N^+H_3CH_2CH_2N^+H_2(CH_2)_3$- 2 $Z^-$ sind, wobei $Z^-$ ein Anion zu $N^+$ ist, vorzugsweise ein Anion einer korrespondierenden Säure, bevorzugt ein Anion einer Carbonsäure, wie ein Acetatanion ist.

4. Antischaumpulver nach Anspruch 1 oder 2, **dadurch gekennzeichnet, dass** $R^1$ einen $C_1$- bis $C_{18}$-Kohlenwasserstoffrest oder einen $C_1$- bis $C_3$-Alkoxyrest oder einen Hydroxyrest bedeutet.

5. Verfahren zur Herstellung der Antischaumpulver nach einem der Ansprüche 1 bis 4, **dadurch gekennzeichnet, dass** das aminofunktionelle Organopolysiloxan (1) mit dem Trägermaterial (2) gemischt wird.

6. Waschmittelzusammensetzungen enthaltend

   (A) Antischaumpulver enthaltend Antischaummittel (1) und Trägermaterial (2) nach einem der Ansprüche 1 bis 4 und
   (B) übliche Waschmittelkomponenten.

**Claims**

1. Anti-suds powder with retarded anti-sudsing action, comprising

   (1) 5 to 35% by weight of an anti-sudsing agent which is an amino-functional organopolysiloxane and consists of at least one siloxane unit of the general formula

   $$R^1_a Q_b SiO_{\frac{4-(a+b)}{2}} \qquad (I)$$

   and siloxane units of the general formula

   $$R^1_c SiO_{\frac{4-c}{2}} \qquad (II)$$

   where

   $R^1$ is the same or different and is a hydrogen atom, a monovalent, optionally fluorine-, chlorine- or bromine-substituted $C_1$- to $C_{18}$- hydrocarbyl radical or a $C_1$- to $C_{12}$-alkoxy radical or a hydroxyl radical,
   Q is an amino group of the general formula

   $$-R^2-[NR^3-(CH_2)_m-]_x NR^4 R^5 \qquad (III)$$

   or forms thereof with partial or full protonation on the nitrogen atoms,
   where

   $R^2$ is a divalent $C_1$-$C_{18}$-hydrocarbyl radical,
   $R^3$ is a hydrogen atom or a $C_1$-$C_{10}$-alkyl radical,
   $R^4$ is a hydrogen atom or a $C_1$-$C_{10}$-alkyl radical,
   $R^5$ is a hydrogen atom or a $C_1$-$C_{10}$-alkyl radical,
   a is 0, 1 or 2,
   b is 1, 2 or 3,
   c is 0, 1, 2 or 3,
   m is 2, 3 or 4, and
   x is 0, 1 or 2,

   and the sum of a+b is less than or equal to 3,

(2) 65 to 95% by weight of a carrier material selected from the group of sodium carbonate, sodium sulphate, aluminium silicate, potassium carbonate, potassium sulphate, sodium hydrogencarbonate, potassium hydrogencarbonate and zeolites, and mixtures thereof, with the proviso that the additional use of silicas in the anti-suds powders is ruled out.

**2.** Anti-suds powder according to Claim 1, **characterized in that** the amino-functional organopolysiloxanes (1) used are those of the general formula

$$Q_k R^1{}_{3-k}SiO(R_2SiO)_m(QR^1SiO)_n SiR^1{}_{3-k}Q_k \qquad (IV)$$

where

R is the same or different and is a monovalent $C_1$- to $C_{18}$-hydrocarbyl radical,
$R^1$ is as defined in Claim 1,
Q is as defined in Claim 1,
k is 0 or 1,
m is 0 or an integer from 1 to 1000,
n is 0 or an integer from 1 to 50,

with the proviso that the organopolysiloxanes contain at least one Q radical per molecule.

**3.** Anti-suds powder according to Claim 1 or 2, **characterized in that** Q is a radical of the formula $NH_2CH_2CH_2NH(CH_2)_3$- or forms thereof with partial or full protonation $N^+H_3CH_2CH_2NH(CH_2)_3$- $Z^-$ or $N^+H_3CH_2CH_2N^+H_2 (CH_2)_3$- 2 $Z^-$, where $Z^-$ is an anion to $N^+$, preferably an anion of a corresponding acid, more preferably an anion of a carboxylic acid, such as an acetate anion.

**4.** Anti-suds powder according to Claim 1 or 2, **characterized in that** $R^1$ is a $C_1$- to $C_{18}$-hydrocarbyl radical or a $C_1$- to $C_3$-alkoxy radical or a hydroxyl radical.

**5.** Process for producing the anti-suds powders according to any of Claims 1 to 4, **characterized in that** the amino-functional organopolysiloxane (1) is mixed with the carrier material (2).

**6.** Detergent compositions comprising

(A) anti-suds powder comprising anti-sudsing agent (1) and carrier material (2) according to any of Claims 1 to 4, and
(B) customary detergent components.

**Revendications**

**1.** Poudre antimousse avec effet antimousse retardé contenant

(1) 5 jusqu'à 35% en poids d'un agent antimousse, qui est un organopolysiloxane à fonctionnalité amino et qui est constitué d'au moins une unité siloxane de formule générale

$$R^1{}_a Q_b SiO_{\frac{4-(a+b)}{2}} \qquad (I)$$

et d'unités siloxane de formule générale

$$R^1{}_c SiO_{\frac{4-c}{2}} \qquad (II)$$

, $R^1$, identique ou différent, représentant un atome d'hydrogène, un radical monovalent $C_{1-18}$-hydrocarboné éventuellement substitué par fluor, chlore ou brome ou un radical $C_{1-12}$-alcoxyle ou un radical hydroxyle, Q représentant un groupe amino de formule générale

$$-R^2-[NR^3-(CH_2)_m-]_xNR^4R^5 \qquad \text{(III)}$$

ou ses formes partiellement ou entièrement protonées au niveau des atomes d'azote,

$R^2$ représentant un radical divalent $C_{1-10}$-hydrocarboné,
$R^3$ représentant un atome d'hydrogène ou un radical $C_{1-10}$-alkyle,
$R^4$ représentant un atome d'hydrogène ou un radical $C_{1-10}$-alkyle,
$R^5$ représentant un atome d'hydrogène ou un radical $C_{1-10}$-alkyle,
a étant 0, 1 ou 2,
b étant 1, 2 ou 3,
c étant 0, 1, 2 ou 3,
m étant 2, 3 ou 4 et
x étant 0, 1 ou 2
et la somme a + b étant inférieure ou égale à 3,

(2) 65 jusqu'à 95% en poids d'un matériau de support choisi dans le groupe du carbonate de sodium, du sulfate de sodium, du silicate d'aluminium, du carbonate de potassium, du sulfate de potassium, de l'hydrogénocarbonate de sodium, de l'hydrogénocarbonate de potassium et des zéolithes et des mélanges correspondants,

étant entendu que l'utilisation conjointe de silices dans les poudres antimousse est exclue.

2. Poudre antimousse selon la revendication 1, **caractérisée en ce qu'**en tant qu'organopolysiloxanes à fonctionnalité amino (1), ceux de formule générale

$$Q_kR^1_{3-k}SiO(R_2SiO)_m(QR^1SiO)_nSiR^1_{3-k}Q_k \qquad \text{(IV)}$$

sont utilisés,

R, identique ou différent, représentant un radical monovalent $C_{1-18}$-hydrocarboné,
$R^1$ ayant la signification selon la revendication 1,
Q ayant la signification selon la revendication 1,
k étant 0 ou 1,
m étant 0 ou un nombre entier de 1 jusqu'à 1000,
n étant 0 ou un nombre entier de 1 jusqu'à 50,

étant entendu que les organopolysiloxanes contiennent au moins un radical Q par molécule.

3. Poudre antimousse selon la revendication 1 ou 2, **caractérisée en ce que** Q représente un radical de formule $NH_2CH_2CH_2NH(CH_2)_3-$ ou ses formes partiellement ou entièrement protonées $N^+H_3CH_2CH_2NH(CH_2)_3-$ $Z^-$ ou $N^+H_3CH_2CH_2N^+H_2(CH_2)_3-$ $2\,Z^-$, $Z^-$ représentant un anion du $N^+$, préférablement un anion d'un acide correspondant, plus préférablement un anion d'un acide carboxylique tel qu'un anion acétate.

4. Poudre antimousse selon la revendication 1 ou 2, **caractérisée en ce que** $R^1$ représente un radical $C_{1-18}$-hydrocarboné ou un radical $C_{1-3}$-alcoxyle ou un radical hydroxyle.

5. Procédé de préparation de la poudre antimousse selon l'une des revendications 1 à 4, **caractérisé en ce que** l'organopolysiloxane à fonctionnalité amino (1) est mélangé avec le matériau de support (2).

6. Compositions de détergent contenant

(A) une poudre antimousse contenant l'agent antimousse (1) et le matériau de support (2) selon l'une quelconque des revendications 1 à 4 et

(B) des composants de détergent usuels.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4637890 A
- US 4894117 A
- EP 254499 B1
- WO 2011107361 A1
- WO 2011107397 A1
- EP 685250 A1